# EUROPEAN PATENT SPECIFICATION

(11) **EP 0 785 228 B1**
(45) Date of publication and mention of the grant of the patent: **09.04.2003**
(21) Application number: 96630076.6
(22) Date of filing: 13.12.1996
(51) Int. Cl.: C08J 11/06, C08L 21/00, B29B 17/00

(54) **Humidified rubber powder obtained by recycling of scrap materials**
Befeuchtetes Gummipulver hergestellt durch Recycling von Abfällen
Poudre de caoutchouc humidifiée obtenue par recyclage de rebuts

(30) Priority: 18.01.1996 AR 33511496
(43) Date of publication of application: 23.07.1997
(73) Proprietor: Lupo, Joaquin, 5023 Barrio del Libertador, Loma Hermosa (BA) (AR); Tre, Luis Jacinto, 5023 Barrio del Libertador, Loma Hermosa (BA) (AR)
(72) Inventor: Lupo, Joaquin, 5023 Barrio del Libertador, Loma Hermosa (BA) (AR); Tre, Luis Jacinto, 5023 Barrio del Libertador, Loma Hermosa (BA) (AR)
(74) Representative: Schmitz, Jean-Marie

(56) References cited:
- WO-A-93/20132
- US-A- 5 114 648
- PATENT ABSTRACTS OF JAPAN vol. 004, no. 089 (C-016), 25 June 1980 & JP 55 054338 A (SANWA KAKO KK), 21 April 1980,
- PATENT ABSTRACTS OF JAPAN vol. 005, no. 144 (C-071), 11 September 1981 & JP 56 076439 A (EIWA KASEI KOGYO KK;OTHERS: 01), 24 June 1981,

## Description

The present invention refers to a humidified rubber powder according to the preamble of claim 1, and a process for obtaining humidified rubber powder according to the preamble of claim 2.

So far, recycling of discarded tires has constituted a serious problem worldwide, since, in principle, one of the main uses of such tires is to relocate them in the automobile market with the corresponding safety problems.

As noted in an article of the newspaper Ambito Financiero of November 28, 1995, page 10, columns 4 through 6, ... no efficient method to degrade used rubber has been discovered yet. Experiments are being made to use it as fuel for boilers. As an example of the difficulties that the developed countries have encountered as regards the disposal of this kind of waste ... Some entrepreneurs found the solution and the goldmine at the same time: the exportation to developing nations of used tires "in the last few years thousands of containers of scrap goods have come to Argentina: in addition to endangering the life of automobile drivers they constitute a menace to the local industry of tires and to job opportunities "...".

As observed in the first part of this article, no efficient method has been obtained so far for the degradation of rubber; we could also add that the same happens with plastic, for which reason an ecologically optimal way is to reuse these materials so that they do not turn into waste. The main goal of this invention refers precisely to the creation of a new raw material with sufficient versatility so as to be a base material for several industrial applications.

There exists in the market methods of reusing tires, which employ at most 20% of the used tire, to which virgin rubber is added and the result is a product used for the manufacture of, for example, solid tires for tricycles or bicycles, carpeting for automobiles, etc., with reduced costs with respect to a product made entirely with virgin rubber.

Said procedures such as the one described in the foregoing paragraph fully reject the use of fabric and/or metal residues (existing in tires) which are burnt or thrown away.

In order to expand on even more the description of the field of application of used tires, we can cite the book "Gestion Integral de Residuos Sólidos" (Integral treatment of solid residues) which on page 856 through 859, paragraph 15.13, makes direct reference to the handling of used tires in the United States"... Every year in the United States approximately 281 million tires are replaced. It is estimated that 237 million are discarded. Ten million are reused and 33 million are recapped or retroden. From 2 to 3 billion tires have remained stored in piles, and some millions more have been dumped illegally. Approximately 14 per cent of the discarded tires are used for fuel; it is estimated that 5 per cent is used for chipboard, rubber powder and miscellaneous uses and 4 per cent is exported...".

The foregoing and the figures detailed above being taken into account, the large quantity of existing base material is clearly appreciated, and furthermore, as observed in the same book..."...Generally, there are no specifications for the recycling of used tires because many of the applications are new and are not developed completely. The specifications for reusable tires vary according to the recappers, retreaders and remanufacturers of tires.

On the basis of all the foregoing, the humidified rubber powder obtained by recycling of scrap materials, is ranked in a preferential position with respect to the recycling of used tires, since it is a new raw material capable of replacing with complete success in the manufacture of numberless items, wood, sheet zinc, fiber cement, plastic and any other rigid or semirigid material, allowing the use of 100 per cent of the material that comes from the used tire (rubber, fabric, etc.). The manufacturing cost of said raw material is equivalent to approximately 50% as contrasted with that of such substitutes which may be used in the manufacture of similar products (polyethylene, rubber, PVC, etc.)

The humidified rubber powder of the present invention is defined in the characterized portion of claim 1 and the process is defined in the characterizing part of claim 2.

In order to understand even more the characteristics of aid humidified rubber powder obtained by recycling of scrap materials we detail below the different stages of the process of manufacture of the powder which is the object of this invention, which are as follows:
a) Tires are washed and dried by forced hot air or by normal ventilation.
b) With a special mill tires are cut up into small pieces which will be then grounded.
c) With special mills, the rubber is grounded until achieving the microns needed, and is selected with sieves whose mesh ranges from 18 to 30 microns, the rest is ground again until obtaining the necessary microns; it should be mentioned that in this process 100% of the scrap tires (rubber and fabric) is used. If tires with steel meshes are used, and if the disposal of the metal residues thereof is desired, the ground rubber undergoes a cleaning process through electromagnets which will remove the steel residues from the grounded matter.
d) After this process, the recovered plastics, which are previously selected, are added, and they are washed and grounded with adequate mills and sifted until the meshes are equivalent to those of tires.
e) Next comes the mixing stage in which rubber is put into conventional mixers which may be of the following type: paddle, disk (dispersing), drum, or others, then the plastic, and a solution composed of an acid (e.g. lactic acid, phosphoric acid or formic acid) and toluene or M.I.K. (methyl isobutyl ketone) are added in appropriate proportions until achieving a final homogeneous product which has an appearance of humidified powder, which is then ready for its use or packaging in containers suitable for that purpose.

It is pointed out that in accordance with environmental conditions both as regards humidity and temperature, and in order to maintain an obtained product with constant characteristics, the acid-toluene or M.I.K. solution is to be regulated within a range of acid variation between 12 and 50%.

For the purpose of specifying even more the quantitative structure of the raw material in question, we will define it by reference percentage limits, as follows:

| | |
|---|---|
| Discarded tires | 77%-66% |
| Recovered and grounded plastics | 15%-22% |
| Acid with Toluene or M.I.K. solution | 8%-12% |
| Said solution being composed, according to the following percentages, of: | |
| Acid | 12-50% |
| Toluene or M.I.K. | 50-88% |

Once said raw material is obtained, several products may be manufactured, according to two of the main varieties which may be obtained (rigid or semirigid), for example:
- Rigid solid: Building (bricks, tiles, etc.) Pallets
Telephone poles or electricity pylons Boxes (cases) for accumulators (storage batteries) for automobiles
- By extrusion: Pipes for sewers
Downspouts
- By injection: Soles for shoes
Gutters
Sheets
(it replaces pressboard, zinc, fiber cement)
- By pressing: Floor tiles

Moreover, the product obtained may be stuck with generic vinyl or synthetic glues, neoprene, cyanoacrylates or contact cement. It may also be painted for appropriate finishing.

As complementary information, we can adduce that in certain applications it is likely that the metal of the discarded tires should be removed (if they are tires with steel mesh), since if the product to be obtained is of semirigid nature, if bending occurs there exists the possibility of a tear on the wall, furthermore, if it is oxidized it may come off and this may result in an area of less resistance on the wall of the product.

## Claims

1. Humidified rubber powder obtained by recycling of scrap materials of the type usable as raw material for the manufacture of several products applicable to such industries as building, automobile accessories, shoes, **characterized by** containing from 66% to 77% of recycled material obtained by the grinding of 100% of discarded tires, to a mesh between 18 and 30 microns; from 15% to 22% of recycled plastic material, ground to a mesh between 18 and 30 microns; and from 8% to 12% of a solution of acid with toluene or M.I.K. (methyl isobutyl ketone); the percentage of the acid in said solution being between 12% and 50%, while the percentages of toluene or M.I.K. are between 50% and 88%.

2. Process for obtaining humidified rubber powder, according to the previous claim, **characterized by** being made as follows: a) tires are washed and dried by forced hot air or by normal aeration; b) with a special mill tires are cut up into small pieces which will be then ground; c) with special mills, the rubber is ground and is selected with sieves whose mesh ranges from 18 to 30 microns, the rest is ground again wherein in this process 100% of the material from the scrap tires is used; d) after this process, the recovered plastics are added, and they are washed and ground with adequate mills and sifted until the meshes are equivalent to those of tires, that is to say, between 18 and 30 microns; e) next comes the mixing stage in which rubber is put into conventional mixers, then the plastic, and the solution composed of acid and toluene or M.I.K. (methyl isobutyl ketone) are added in appropriate proportions until achieving a final homogeneous product with an appearance of humidified powder.

3. Process according to claim 2, **characterized by** using tires with steel mesh disposing of the metal residues thereof, cleaning the ground rubber through electromagnets, and thereby removing the steel residues from the ground matter.

## Patentansprüche

1. Befeuchtetes Gummipulver, erhalten durch das Wiederverwenden von Schrottmaterialien des Typs, die als Rohmaterial zur Herstellung mehrerer Produkte verwendet werden können, die in Industrien wie etwa der Bau-, Automobilzubehör-, Schuhindustrie angewandt werden können, **dadurch gekennzeichnet, dass** es zwischen 66% und 77% wiederverwendeten Materials enthält, das durch das Zermahlen von 100% Altreifen zu einer Siebgröße zwischen 18 und 30 Mikron erhalten wurde; zwischen 15% und 22% wiederverwendeten Kunststoffmaterials, zu einer Siebgröße zwischen 18 und 30 Mikron zermahlen; und zwischen 8% und 12% einer Lösung von Säure mit Toluen oder MIK (Methylisobutylketon); wobei der Prozentsatz an Säure in besagter Lösung zwischen 12% und 50% beträgt, während die Prozentsätze von Toluen oder MIK zwischen 50% und 88% liegen.

2. Verfahren zum Erhalten befeuchteten Gummipulvers gemäß dem vorgenannten Anspruch, **dadurch gekennzeichnet, dass** es durchgeführt wird wie folgt: a) Reifen werden gewaschen und durch Gebläseheißluft oder durch normale Belüftung getrocknet; b) mit einer Spezialmühle werden die Reifen in kleine Stücke zerschnitten, die dann zermahlen werden; c) der Gummi wird mit Spezialmühlen zermahlen und wird mit Sieben, deren Siebgröße von 18 bis 30 Mikron reicht, selektiert, der Rest wird wieder zermahlen, wobei in diesem Verfahren 100% des Materials der Altreifen verwendet werden; d) nach diesem Prozess werden die wiedergewonnenen Kunststoffe zugesetzt, und sie werden gewaschen und mit geeigneten Mühlen zermahlen und gesiebt, bis die Siebgrößen denen der Reifen entsprechen, das heißt, zwischen 18 und 30 Mikron; e) als nächstes kommt die Mischstufe, worin der Gummi in konventionelle Mixer eingebracht wird, dann werden der Kunststoff und die aus Säure und Toluen oder MIK (Methylisobutylketon) zusammengesetzte Mischung in geeigneten Proportionen zugesetzt, bis schließlich ein homogenes Endprodukt mit dem Aussehen befeuchteten Pulvers erzielt wird.

3. Verfahren gemäß Anspruch 2, **gekennzeichnet durch** die Verwendung von Reifen mit Stahleinlage, wobei deren Metallrückstände entfernt werden, indem der zermahlene Gummi mit Elektromagneten gereinigt wird und **dadurch** die Stahlrückstände aus dem gemahlenen Material entfernt werden.

## Revendications

1. Poudre de caoutchouc humidifiée que l'on obtient par recyclage de matières de rebut du type que l'on peut utiliser comme matière brute pour la fabrication de plusieurs produits qui s'appliquent à des industries telles que l'industrie de la construction, l'industrie des pièces détachées pour des véhicules automobiles, l'industrie de la chaussure, **caractérisée par le fait qu'**elle contient, à concurrence de 66 % à 70 %, une matière recyclée que l'on obtient par broyage de 100 % de bandages pneumatiques mis au rebut ; à concurrence de 15 % à 22 %, une matière plastique recyclée, soumise à un broyage pour obtenir une dimension entre 18 et 30 microns ; et à concurrence de 8 à 12 %, une solution d'acide avec du toluène ou de la MIK (méthylisobutylcétone) ; le pourcentage de l'acide dans ladite solution se situant entre 12 % et 50 %, tandis que le pourcentage du toluène ou de la MIK se situant entre 50 et 88 %.

2. Procédé pour obtenir une poudre de caoutchouc humidifiée selon la revendication précédente, **caractérisé en ce qu'**on met en oeuvre comme indiqué ci-après : a) on lave les bandages pneumatiques et on les sèche par ventilation forcée d'air chaud ou par aération normale ; b) avec un broyeur spécial, on découpe les bandages pneumatiques pour obtenir de petits morceaux qui seront à leur tour broyés ; c) avec des broyeurs spéciaux, on broie le caoutchouc et on le soumet à un classement avec des tamis dont la dimension des mailles se situe entre 18 et 30 microns, le reste étant broyé une nouvelle fois, 100 % des matières provenant des bandages pneumatiques mis au rebut étant utilisés dans ce procédé ; d) après ce procédé, on ajoute les matières plastiques recyclées, avant de les laver et de les broyés avec des broyeurs adéquats et avant de les tamiser jusqu'à ce qu'on obtienne des dimensions équivalentes à celles des bandages pneumatiques c'est-à-dire entre 18 et 30 microns ; e) on procède ensuite à l'étape de mélange dans laquelle on place le caoutchouc dans des malaxeurs conventionnels, avant d'ajouter la matière plastique, la solution composée de l'acide et du toluène ou de la MIK (méthylisobutylcétone) dans des proportions appropriées pour obtenir un produit homogène final possédant l'aspect d'une poudre humidifiée.

3. Procédé selon la revendication 2, **caractérisé par le fait que** l'on utilise des bandages pneumatiques comprenant des mailles en acier et on élimine les résidus métalliques desdits bandages pneumatiques en soumettant le caoutchouc broyé à un nettoyage à l'aide d'électroaimants et en retirant ainsi les résidus d'acier de la matière à l'état broyé.
